# EUROPÄISCHE PATENTANMELDUNG

(11) **EP 4 797 510 A1**
(43) Veröffentlichungstag der Anmeldung: **26.08.2026**
(21) Anmeldenummer: 25159314.1
(22) Anmeldetag: 21.02.2025
(51) Int. Cl.: H02K 11/02, H02K 11/33, H02K 5/04

(54) **ANTRIEB MIT KOMBIDROSSEL**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Koch, Thomas, 90459 Nürnberg (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner mbB

(57) **Zusammenfassung**

Die Erfindung betrifft einen Antrieb (30) mit
- zumindest einer dynamoelektrischen rotatorischen Maschine (1), die in einem Gehäuse (2) angeordnet ist, mit einem in einem Stator (4) angeordneten Wicklungssystem (5) und einem durch eine Luftspalt (23) davon getrennten Rotor (6), der über zumindest ein Lager (10) eines B-seitigen topfähnlichen Lagerschilds (7), um eine Achse (12) drehbar gelagert ist,
wobei sich Stator (4) und Rotor (6) in einem Motorinnenraum (18) befinden
- zumindest einem Umrichter, wobei der Umrichter (16) zumindest einige der folgenden Bauelemente, wie Leistungshalbleiter, Kondensatoren, Steuer- und Regeleinheiten und Kommunikationseinheiten aufweist und sich in einem Umrichterbauraum (13) befindet, der zumindest abschnittsweise von dem B-seitigen Lagerschild (7) radial umgeben ist, wobei zumindest einige Bauelemente des Umrichters (16) mit dem Lagerschild (7) thermisch leitend verbunden sind, indem insbesondere wärmeintensive Bauelemente des Umrichters (16), an einer inneren Seitenwand (20) des topfähnlichen Lagerschilds (7) angeordnet sind,
- wobei der Umrichter (16) axial betrachtet zwischen der dynamoelektrischen rotatorischen Maschine (1) und dem Lager des B-seitigen topfähnlichen Lagerschilds (7) angeordnet ist,
- wobei Motorinnenraum (18) und Umrichterbauraum (13) durch einen Drosseln (32,33) aufweisenden Drosselkörper (31) getrennt sind.

## Beschreibung

Die Erfindung betrifft einen Antrieb mit einer dynamoelektrischen Maschine und einem Umrichter, die axial hintereinander in einem Innenraum des Antriebs angeordnet sind.

Für drehzahlveränderbare dynamoelektrische Maschinen, wie Elektromotoren, vor allem Synchron-, Asynchron-, und Reluktanzmotoren werden Frequenzumrichter zum Einstellen der gewünschten Drehzahl benötigt.

Durch die Zunahme von dezentralen, fluktuierenden Energieerzeugern (Photovoltaik, Windkraft) und die gleichzeitige Steigerung der Anzahl von nichtlinearen Lasten (z.B. Umrichter, Ladesäulen, LED-Beleuchtung, Netzteile, ...) entsteht eine teils drastisch verschlechterte Versorgungsnetzqualität in Form von Spannungsschwankungen, Oberschwingungen, pulsfrequente Störaussendungen bis hin zu Funkstörungen.

Die normativen Anforderungen der elektrischen Netzqualität werden gleichzeitig immer strenger, dies gilt insbesondere für den Frequenzbereich von 2 kHz bis 150 kHz, welcher in der Vergangenheit normativ nicht geregelt war.

Während ein Teil der Normen die zulässigen Verträglichkeitspegel definiert, wird mit einem anderen Teil dieser Normen der Produktstandard beschrieben, welcher in Bezug auf die CE-Kennzeichnung relevant ist.

Insbesondere starke Netze mit einem RSC >> 50 (Relative Short-Circuit Power) zeigen trotz einer Netzdrossel einen hohen Stromoberschwingungsanteil im Bereich von 0...2,5 kHz, so dass hier eine über die Netzdrossel hinausgehende Filterung angeraten ist. Bei schwachen Netzen, d.h. mit einer kleinen bezogenen Kurzschlussleistung (RSC < 15), ist zu beachten, dass die Netzrückwirkungen, d. h. die Spannungsoberschwingungen in der Netzspannung, zunehmen.

Zur Begrenzung des Spitzenwertes im Netzstrom des Umrichters und zur Reduzierung der Oberschwingungen im Netzstrom werden in der Regel Drosseln eingesetzt. Diese werden entweder im DC-Zwischenkreis oder am Umrichtereingang, also auf der Netzseite vorgesehen. Abhängig von der Umrichterauslegung kann auch eine Kombination von Netz- und Zwischenkreisdrossel vorteilhaft bzw. erforderlich sein.

Die Netzdrosseln und Zwischenkreisdrosseln nehmen Bauraum ein.

Der verfügbare Bauraum innerhalb einer motorintegrierten Umrichteranordnung ist begrenzt. Bisher bekannte Drosselkomponenten sind kaum im Aktivbereich der Motor-Umrichteranordnung unterzubringen. Eine Ersatzlösung ist die Positionierung der Drossel außerhalb des Motorgehäuses. Die Anbringung ist aufwändig und erfordert eine zusätzliche Leitungsführung. Außerdem wird dadurch das Lichtraumprofil des Motors vergrößert.

Die Frequenzumrichter werden für gewöhnlich in eigenen Schaltschränken vorgesehen oder sind auch außen am Gehäuse der dynamoelektrischen Maschine angebaut. Hierbei gibt es verschiedene Varianten den Umrichter am Gehäuse anzubauen. Zum Beispiel als Aufsatz mit eigener Belüftung oder auch mit integrierter Belüftung durch den Motorlüfter.

Bei dezentralen Umrichter-Ausführungen erfolgt der Anschluss zwischen Umrichter und Motor über eine Zuleitung zum Klemmenbrett. Bei auf den Motor gesetzten Umrichter-Ausführungen werden die Anschlussleitungen durch Öffnungen im Gehäuse zum Umrichter geführt.

Dieser manuelle Aufwand, die Ständerleitungen und zusätzliche Leitungen von der Wicklung durch die Gehäuseöffnung zu führen, verursacht zum einen besonders bei kleineren Baugrößen unverhältnismäßig hohe Montagekosten. Zum anderen verliert durch die Aneinanderreihung der Einzelkomponenten (Motor + Umrichter) das Antriebssystem an Kompaktheit, wodurch die Austauschbarkeit der Antriebssysteme verloren geht.

Eine Antriebseinheit ist beispielsweise aus der DE 198 12 729 A1 bekannt. Dort ist ein Elektromotor beschrieben, insbesondere mit einem Lüfterrad zur Bildung eines Axial- oder Radialluftstroms. Diese Antriebseinheit weist ein Steuerungsgehäuse mit einer Steuereinheit auf, wobei die Antriebseinheit einen Stator, ein Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Aus der EP 0 854 560 A1 ist ein elektrisches Antriebsystem mit Motor und Umrichter mit Fremdbelüftung bekannt, die axial hintereinander angeordnet sind.

Aus der EP 3 363 105 B1 ist ein B-Lagerschild für einen Elektromotor bekannt, wobei in das B-Lagerschild eine Platine integriert ist, wobei auf der Platine ein Umrichter ausgebildet ist.

Diese Ausführungen der Umrichter direkt am Motor benötigen viel Bauraum, da das Lager zwischen Motor und Umrichter ist. Dies macht den Antrieb vergleichsweise groß und schwer.

Aus der DE 10 2004 031 399 A1 ist ein Umrichtermotor mit einem eigenbelüfteten Elektromotor und einem Frequenzumrichter bekannt, wobei in einem topfförmigen Lagerschild Bauteile des Frequenzumrichters am Boden des topfförmigen Lagerschildes angeordnet sind.

Auch dieser Antrieb benötigt vergleichsweise viel Bauraum.

Ausgehend davon liegt der Erfindung die Aufgabe zugrunde, einen kompakten, einfach aufgebauten Antrieb für vielfältige Anwendungen zu schaffen.

Die Lösung der gestellten Aufgabe gelingt durch einen Antrieb gemäß den Merkmalen der unabhängigen Ansprüche.

Vorteilhafte Ausgestaltungen sind den abhängigen Ansprüchen zu entnehmen.

Erfindungsgemäß ist der Antrieb mit zumindest einer dynamoelektrischen rotatorischen Maschine, einer Synchronmaschine, Asynchronmaschine oder Reluktanzmaschine ausgestattet, die zumindest überwiegend in einem Gehäuse angeordnet ist. Ein in das Gehäuse eingeschrumpfter oder eingepresster Stator weist in seinem im Wesentlichen axial verlaufenden Nuten ein Wicklungssystem auf, das bei Bestromung aufgrund elektromagnetischer Wechselwirkungen mit einem, durch einen Luftspalt getrennten Rotor ein Drehmoment an einer drehfest mit dem Rotor verbundenen Welle erzeugt.

Diese Einpassung des Stators in das Gehäuse schafft einen vergleichsweise guten Wärmeübergang vom Blechpaket des Stators auf das Gehäuse und optionalen Gehäuserippen. Der Rotor ist über zumindest ein Lager eines B-seitigen topfähnlichen Lagerschilds um seine Achse drehbar gelagert.

Bei einer dynamoelektrischen Maschine, wie einem Motor gibt es eine A-Seite (Abtriebsseite; Drive-End; DE-Seite), deren eines Wellenende zu Wellenanbauelementen, wie Abtriebselementen und/oder einer Arbeitsmaschine weist und mit dieser Arbeitsmaschine mechanisch gekoppelt wird. Die B-Seite des Motors liegt am anderen Wellenende (Non-Drive-End; NDE-Seite).

Des Weiteren weist der Antrieb zumindest einen Umrichter auf, der je nach Ausführung als Umrichter mit Zwischenkreis, als Direktumrichter etc. zumindest einige der folgenden Bauelemente, wie Leistungshalbleiter, Kondensatoren, Steuer- und Regeleinheiten und Kommunikationseinheiten aufweist. Der Umrichter nimmt einen Umrichterbauraum ein und ist zumindest abschnittsweise von dem B-seitigen Lagerschild radial und umfänglich umgeben. Dabei sind zumindest einige Bauelemente des Umrichters mit dem Lagerschild thermisch leitend verbunden, indem insbesondere wärmeintensive Bauelemente des Umrichters, an einer inneren Seitenwand des topfähnlichen Lagerschilds angeordnet sind. Der Umrichter ist, axial betrachtet, zwischen der dynamoelektrischen rotatorischen Maschine und dem Lager des B-seitigen topfähnlichen Lagerschilds angeordnet. Zwischen Motorinnenraum und Umrichterbauraum ist ein Drosseln aufweisenden Drosselkörper vorgesehen. Diese motorintegrierte Kombidrossel minimiert Netzrückwirkungen des ein Motor-Umrichter-System aufweisenden Antriebs.

Die Leistungshalbleiter des Umrichters, wie IGBTs, als besonders wärmeintensive, also verlustleistungserzeugende Bauelemente des Umrichters, stehen in thermisch direkt leitfähigem Kontakt mit dem Lagerschild, insbesondere mit der Seitenwand des topfähnlichen B-seitigen-Lagerschildes. Damit ist eine direkte wärmetechnische Kopplung an die Seitenwände des topfähnlichen Lagerschildes gegeben, sodass die Wärmeabfuhr aus dem Umrichter insbesondere über die Seitenwände erleichtert wird. Dies führt zu einer kompakten Bauweise des Antriebs.

Als Drosseln sind dabei Spulen bzw. Induktivitäten zur Begrenzung des Spitzenwertes im Netzstrom des Umrichters und zur Reduzierung der Oberschwingungen im Netzstrom vorgesehen. Sie sind sie üblicherweise in Reihe zu anderen Bauteilen des Umrichters oder den Verbrauchern geschaltet.

Die Drosseln bilden jeweils einen geschlossenen magnetischen Kreis und weisen daher nur geringe magnetische Streufelder auf. Diese geringe Streuung trägt u.a. zur besseren elektromagnetischen Verträglichkeit bei.

Um Wirbelströme im Spulenkern zu reduzieren, besitzen die Drosseln einen ferromagnetischen Kern aus isolierten Elektroblechen, die längs zum magnetischen Feld ausgerichtet sind. Hierdurch werden sowohl die im Spulenkern entstehenden Verluste verringert als auch die Induktivität erhöht. Beides begünstigt einen kompakten Drosselaufbau.

Die Drosseln beeinflussen Gleichstrom und niederfrequente Ströme nicht oder nur wenig, hochfrequente Wechselströme dagegen werden durch ihren hohen induktiven Widerstand wirksam verringern, und führen damit zur Einhaltung der notwendigen Grenzwerte im Netzstrom.

Da die Drossel hochfrequente Stromanteile begrenzt, werden steile Stromanstiegsflanken abgeflacht und gleichgerichtete Wechselströme geglättet, was auch zur Reduzierung der Oberschwingungen im Netzstrom beiträgt.

Die Drosseln, arbeiten in Reihe zur speisenden Netzspannung im Gleichrichter, um die Oberwellenbelastung des speisenden Netzes zu verringern.

Der Drosselkörper weist somit einen ferromagnetischen Kern aus Elektroblechen auf, die im fixierten Zustand im Gehäuse axial geschichtet sind. Der Drosselkörper wird somit aus Einzelblechen aufgeschichtet und per Stanzpaketierung oder per Backlack oder per Stanzpaketierung zusammengehalten. Die Einzelbleche können auch aus Drosselkörperelementen aufgebaut sein, die umfänglich nur durch jeweils einen Blechsteg verbunden sind. Der Drosselkörper ist somit geteilt ausgeführt. Die Spulen der Drossel werden entweder maschinell auf einem Wickelkörper hergestellt und dann auf die Zähne des Drosselkörpers oder der Drosselkörperelemente gesteckt oder direkt auf den vorher isolierten Drosselkörper oder der Drosselkörperelemente gewickelt.

Falls erforderlich, kann so auch der dreieckige Bereich zwischen zwei umfänglich benachbarten Spulen bewickelt werden. Hierbei ist die axiale Ausdehnung der Spule zu beachten. Durch den speziell ausgeformten Blechsteg können die Spulen auf den Drosselkörperelementen nahezu spaltfrei zusammengeklappt werden.

Der Drosselkörper trägt sowohl die Zwischenkreisdrosseln des Umrichters, insbesondere zwei Zwischenkreisdrosseln als auch die Netzdrosseln zwischen Gleichrichter des Umrichters und dem Netz, insbesondere drei Netzdrosseln. Der Drosselkörper besteht aus einem äußeren Teil mit Zähnen und einem getrennten inneren Teil mit einer Wellendurchführung. Zwischen beiden Teilen wird über Distanzelemente oder ein zusammenhängendes Distanzrohr der erforderliche Spalt hergestellt. Die zusammengeklappten Drosselkörperelemente werden als bestückter Drosselkörper in das Gehäuse axial eingeschoben und dort im vorgegebenen Abschnitt fixiert. Dazu werden Spreizkeile ein- oder beidseitig eingebracht.

Die Kontaktierung der Drossel im Montageablauf richtet sich nach dem Kontaktierungskonzept des Antriebs. Es ist dabei sowohl ein netzseitiger Anschluss wie auch ein Anschluss an den Zwischenkreis des Umrichters vorzusehen. Ebenso muss das Wicklungssystem von der Wechselrichterseite des Umrichters gespeist werden.

Mögliche Varianten der Kombidrossel umfassen unterschiedliche geometrische Abmessungen von Zwischenkreis- und Netzdrosseln (unsymmetrische Geometrie) sowie die Aufteilung der jeweiligen Spulen in mehrere Einzelspulen in Reihenschaltung. Dies kann thermisch und/oder auch geometrisch vorteilhaft sein (Annäherung des Spulenquerschnitts an ein Rechteck), jedoch kann hierbei die erzielbare Induktivität sinken.

Geometrie und Anordnung des Drosselkörpers bzw. der Kombidrossel sind an das Gehäuse des Motors angepasst, daraus ergibt sich eine optimale Raumausnutzung und es kann somit die größtmögliche Drosselinduktivität und damit auch der größtmögliche Effekt in Bezug auf die Minimierung der Netzrückwirkungen erzielt werden.

Es werden somit keine externen Drosseln benötigt, wodurch das Lichtraumprofil des Motors erhalten bleibt (Vorteil beim Retrofit).

Wie sich anhand von Berechnungen für einen Spannungszwischenkreisumrichter mit Diodeneinspeisung zeigen lässt, ergibt sich die größte Reduktion netzseitiger Oberschwingungen durch eine Kombination von Zwischenkreisdrosseln mit Netzdrosseln.

Der Innenraum des Antriebs setzt sich aus dem Motorinnenraum und dem Umrichterbauraum zusammen, die axial von dem A- und B-seitigen Lager begrenzt sind und von einem zwischen Motorinnenraum und Umrichterbauraum angeordneten Drosselkörper separiert sind.

Der Umrichter bzw. dessen Bauelemente sind in axialer Richtung betrachtet unmittelbar hinter dem Stator mit Wicklung, also dem Wickelkopf im Gehäuse und/oder im Lagerschild integriert. Dabei sind die Drosseln, also die Netzdrosseln und/oder Zwischenkreisdrosseln des Drosselkörpers zwischen dem Umrichterbauraum und dem Motoraktivteil angeordnet.

Die Bauelemente des Umrichters können sich auch auf die benachbarten Abschnitte von Gehäuse und Lagerschild verteilen.

Dabei ist die Elektronik des Umrichters und der Wickelkopf des Stators in axialer Richtung lediglich ca. 10 bis max 100 mm voneinander beabstandet.

Der Drosselkörper ist - axial betrachtet - zwischen Wickelkopf des Stators und dem Umrichterbauraum eingebracht. Die Kontur des Außenumfangs des Drosselkörpers ist dabei der Innenkontur des Gehäuses angepasst, um einen möglichst guten Wärmeübergang von Drosselkörper auf das Gehäuse zu erhalten.

Der Drosselkörper ist vorteilhaft in seiner Querschnittsform - also senkrecht zur Achse betrachtet - ringförmig ausgeführt.

Eine vergleichsweise gute Wärmeabfuhr gelingt auf Umrichterseite vor allem, indem die Leistungshalbleiter des Umrichters, wie die IGBTs in axial verlaufenden, tangential ausgerichteten Taschen an der inneren Seitenwand des topfähnlichen Lagerschilds angeordnet, insbesondere thermisch z.B. durch Verspann- oder Federelemente angekoppelt sind.

Ergänzend oder stattdessen können die Leistungshalbleiter des Umrichters mit der inneren Seitenwand des Lagerschildes auch durch einen wärmeleitfähigen Verguss einen zusätzlich verbesserten thermisch leitfähigen Kontakt zwischen den Bauelementen des Umrichters und dem Lagerschild herstellen.

Mittels eines Druckgussverfahren können das Lagerschild und/oder das Gehäuse hergestellt sein. Das Lagerschild und/oder das Gehäuse besteht aus vergleichsweise thermisch gut leitfähigem Material, wie Aluminium oder einer Aluminiumlegierung.

Durch das Druckgussverfahren kann das Lagerschild und in dem Lagerschild verschiedenste vorgesehene Geometrien, wie z.B. die Taschen eingebracht werden, so dass u.a. die IGBTs ohne zusätzliches Verschrauben befestigt werden können. Dies kann durch Klipsen, Verspannen oder Einschieben der IGBTs in eine konische Schiene der Tasche oder ähnliches erfolgen. Zur Fixierung der IGBTs und zum besseren Abtransport der Verlustenergie werden diese optional noch mit speziellem wärmeleitfähigem Harz vergossen/verklebt.

Eine optional zusätzliche Lüftereinheit, die als Eigen- und/oder Fremdbelüftung ausgeführt ist und die einen Luftstrom, zumindest abschnittsweise um das Lagerschild und/oder das Gehäuse schafft, verbessert zusätzlich die erforderliche Kühlwirkung. Diese Lüftereinheit ist in axialer Verlängerung an die NDE-Seite anbringbar.

Axial und/oder radial ausgerichtete Kühlrippen am Lagerschild und/oder Gehäuse der dynamoelektrischen rotatorischen Maschine steigern die Kühleffizienz des Antriebs.

Diese Kühlrippen am Außendurchmesser sorgen für eine sehr gute Kühlung der Elektronikkomponenten. Die Kühlrippen sind ideal im Kühlluftstrom des Motors angeordnet und sorgen somit für eine hocheffizienten Abtransport der Verlustenergie.

Die axial verlaufenden Kühlrippen von Lagerschild und Gehäuse sind entweder axial fluchtend oder um einen vorgegebenen Winkelversatz versetzt ausgerichtet, um je nach Ausführung die Kühlleistung zu verbessern. Umfänglicher Versatz der Kühlrippen von Gehäuse und Lagerschild um einen halben Abstand zwischen zwei Gehäuserippen erhöht Verwirbelungen, sodass u.a. eine turbulente Strömung eine verbesserte Kühlwirkung erzielt.

Es wird die somit die gesamte Leistungselektronik im Umrichterbauraum direkt an dem Lagerschild, an den Seitenwänden und/oder dem Topfboden angebracht. Durch die Integration der Leistungselektronik in das Lagerschild und somit in den Umrichterbauraum, werden erfindungsgemäß sehr viele Funktionen (Aufnahme des Lagers, Fixierung der Leistungs- und der Steuerelektronik etc.) zusammengefasst. Durch die zusätzliche Anordnung des Drossselkörpers wird der Innenraum des Antriebs ideal ausgenutzt und somit ein kompakter Antrieb geschaffen, der auch zu einer Minimierung der Netzrückwirkungen führt.

Zudem können auch Befestigungsgewinde im Lagerschild mit eingebracht werden, um weitere modulare Anbauten, wie Sensoreinrichtungen und/oder Kommunikationseinrichtungen anzubringen.

Das Lager auf der NDE-Seite, insbesondere ein Kugellager wird axial von außen montiert bzw. bei einem Lagerwechsel demontiert. Dies gestattet auch eine sehr gute Austauschbarkeit im Fehlerfall, ohne den Motor von der Arbeitsmaschine auf der A-Seite trennen zu müssen und den Umrichter auszubauen.

Der Umrichter bzw. Umrichterbauraum und der Drosselkörper weisen mittig einen Durchgang für die Welle auf. Die Leistungselektronik des Umrichters benötigt dazu im Inneren lediglich einen Durchgang für die Welle des Motors (Durchmesser Motorwelle + 1mm = Wellendurchgang in dem Umrichterbauraum) und nicht wie üblich einen großen Durchgang für das Lager. Das schafft zusätzliches Bauvolumen für die Bauelemente des Umrichters z.B. die Leistungselektronik und macht den Antrieb mit seinem Motor-Umrichter System vor allem axial noch kompakter, indem der erfindungsgemäße Drosselkörper im Antrieb mit untergebracht werden kann.

Das Lagerschild weist somit eine Funktionsintegration u.a. von Leistungselektronik im Motorinnenraum auf. Die Bauelemente des Umrichters benötigen kein eigenes Gehäuse, weil alle Befestigungspunkte in das B-seitige-Lagerschild integriert sind. Dadurch wird der Bauraum des Antriebs optimal ausgenutzt und es entsteht ein Antrieb mit einem kompakten Motor-Umrichter-system mit Drosselkörper. Es besteht keine Behinderung eines Modulkonzeptes auf der NDE Seite des Motors, d.h. alle denkbaren Anbauten an das NDE-Wellenende, wie Bremse, Fremdlüfter, oder ein Geber sind weiter möglich.

Das B-seitige-Lagerschild kann im Vorfeld mit den gesamten Bauelementen des Umrichters bestückt und ggf. vergossen werden. So entsteht ein einbaufertiges Umrichtersystem. Dieses Umrichtersystem kontaktiert über seinen Eingangsstromrichter und ein Klemmbrett eines Klemmenkastens die Netzspannung, während die Ausgangsseite des Umrichtersystems mit dem Wicklungssystem des Motors kontaktiert ist. Diese Kontaktierungen erfolgen vorzugsweise beim Einbau des Lagerschildes an das Gehäuse.

Das B-seitige-Lagerschild ist im Wesentlichen topfförmig ausgestaltet. Der Topfboden weist eine Aussparung auf, durch die die Welle ragt, die u.a. die Antriebswelle der Kühleinheit, insbesondere eines Lüfters bildet. An diese Welle sind auch die oben gewähnten Anbauten drehfest anbringbar. Die Seitenwand weist an ihrer umfänglichen Außenseite axial erstreckende Rippen auf. Die Innenseite des topfförmig ausgeführten Lagerschildes ist vorzugsweise polygonal ausgeführt, um insbesondere die Leistungshalbleiter möglichst direkt an der Innenseite des Lagerschildes und damit an der Wärmesenke einfach anordnen zu können. Damit wird eine vergleichsweise thermisch gute Anbindung dieser Bauelemente an der Seitenwand des Lagerschildes gewährleistet.

Das Umrichtersystem weist je nach Ausführung somit Leistungshalbleiter, Drosseln, Kondensatoren, Steuer- und Regeleinheiten und Kommunikationseinheiten auf, die in dem vorgegebenen Bauvolumen untergebracht sind. Vorzugsweise sind vor allem die großen Wärmequellen, wie z.B. die Leistungshalbleiter der Eingangs- und Ausgangsstromrichter an der inneren Seitenwand des topfähnlich ausgebildeten B-seitigen-Lagerschildes mit einem vergleichsweise geringen Wärmeübergangswiderstand thermisch gekoppelt.

Über eine thermische Kopplung an die umfänglichen Seitenwände und/oder die Stirnseite des Lagerschildes, also den "Topfboden" werden die Bauelemente des Umrichtersystems, vor allem die Leistungshalbleiter, aber auch die Steuer- und Regelelektroniken gekühlt.

Der Stator und auch der Rotor erzeugen Wärme, die u.a. den Innenraum der dynamoelektrischen rotatorischen Maschine aufheizt. Insbesondere der Wickelkopf des Wicklungssystems des Stators kann Temperaturen von kurzzeitig über 180°C erreichen.

Dieser Wärmeeintrag der dynamoelektrischen Maschine wird ebenfalls durch die das Gehäuse und die Lagerschilde umströmende Luft abgeführt. Des Weiteren ist der Stator vorzugsweise in einen Mantel des Gehäuses eingeschrumpft, um einen vergleichsweise guten Wärmeübergang vom Blechpaket des Stators auf das Gehäuse und die Gehäuserippen zu erhalten.

Eine insbesondere als Eigenlüfter ausgeführte Kühleinheit generiert im Betrieb der dynamoelektrischen rotatorischen Maschine einen Kühlluftstrom, der zunächst radial entlang des Topfbodens des Lagerschildes und danach die äußere Seitenwand des Lagerschildes geführt ist. Eine Lüfterhaube, die sich axial Richtung AS-Lager erstreckt, führt den Kühlluftstrom auch entlang der Kühlrippen von Lagerschild und Gehäuse der dynamoelektrischen rotatorischen Maschine.

Die Erfindung sowie weitere vorteilhafte Ausgestaltungen der Erfindung werden anhand prinzipieller dargestellter Ausführungsbeispiele näher dargestellt; darin zeigen:
- FIG 1: einen prinzipiellen Längsschnitt eines erfindungsgemäßen Antriebs mit Drosselkörper,
- FIG 2: einen prinzipiellen Querschnitt eines Drosselkörpers,
- FIG 3: einen Abschnitt eines Drosselkörpers mit Drosselkörperelementen,
- FIG 4: einen Blechsteg zwischen zwei Drosselkörperelementen,
- FIG 5: zwei zusammengesetzte Drosselkörperelemente,
- FIG 6: ein Ausschnitt eines Schaltbilds eines Umrichters.

Es sei angemerkt, dass sich Begriffe wie "axial", "radial", "tangential" etc. auf die in der jeweiligen Figur bzw. im jeweils beschriebenen Beispiel zum Einsatz kommende Achse 12 beziehen. Mit anderen Worten beziehen sich die Richtungen axial, radial, tangential stets auf eine Achse 12 des Rotors 6 und damit auf die entsprechende Symmetrieachse des Stators 4. Dabei beschreibt "axial" eine Richtung parallel zur Achse 12, "radial" beschreibt eine Richtung orthogonal zur Achse 12, auf diese zu oder auch von ihr weg, und "tangential" ist eine Richtung, die in konstantem radialem Abstand zur Achse 12 und bei konstanter Axialposition kreisförmig um die Achse 12 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 6 und Stator 4, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise, lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen im allgemeinen Beschreibungsteil als auch in der konkreten Figurenbeschreibung können nahezu beliebig kombiniert werden. Ebenso sind auch die dort erwähnten Einzelmerkmale der jeweiligen Ausführungen kombinierbar, ohne das Wesen der Erfindung zu verlassen.

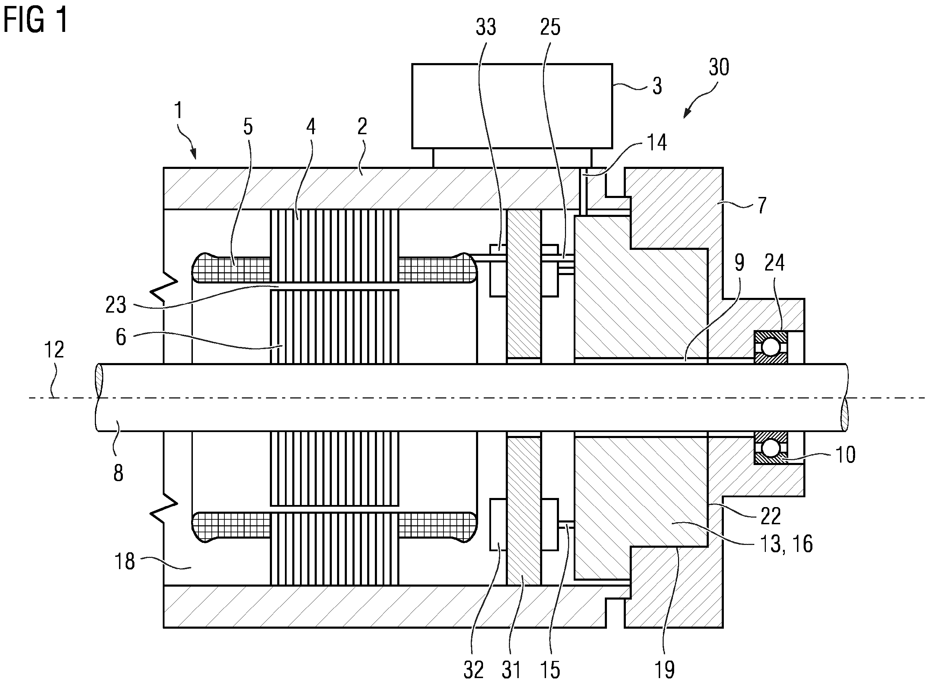

FIG 1 zeigt einen Antrieb 30 mit einer dynamoelektrischen rotatorischen Maschine 1 und einen Umrichter 16. Die dynamoelektrische rotatorische Maschine 1 weist einen Stator 4 auf, der aus axial geschichteten Blechen ein Blechpaket bildet. In im Wesentlichen axial verlaufenden Nuten des Blechpakets des Stators 4 ist ein, einem Luftspalt 23 zugewandtes Wicklungssystem 5 angeordnet, das an den Stirnseiten des Blechpakets des Stators 4 jeweils einen Wickelkopf ausbildet. Drehfest mit einer Welle 8 ist ein Blechpaket eines Rotors 6 verbunden, das in elektromagnetischer Wechselwirkung mit dem bestromten Wicklungssystem 5 des Stators 4 steht und so zu einer Rotation der Welle 8 um eine Achse 12 führt. Die Welle 8 ist in zwei Lagern drehbar gehalten, einem nicht näher dargestellten AS-Lager und einem BS-Lager 10.

Der Rotor 6 kann als Asynchronläufer, permanenterregter Läufer oder Reluktanzläufer ausgeführt sein.

Die dynamoelektrische rotatorische Maschine 1 ist von einem Gehäuse 2 umgeben, das an den Stirnseiten von Lagerschilden begrenzt ist. Das BS-Lager 10 ist von seinem B-seitigen topfartig ausgestalteten Lagerschild 7 gehalten. Das Gehäuse 2 und das B-seitigen topfartig ausgestalteten Lagerschild 7 weisen an ihrem Außenumfang im Wesentlichen axial verlaufende Kühlrippen 11 auf.

Das B-seitige Lagerschild 7 ist über seine Seitenwände 19 mit dem Gehäuse 2 verbunden. Die bauliche Schnittstelle von Gehäuse 2 und B-seitigem Lagerschild 7 muss nicht - wie in FIG 1 dargestellt - mit der räumlichen Trennung von Motorinnenraum 18 und Umrichterbauraum 13 zusammenfallen. Vorteilhafterweise kann jedoch eine mechanische und/oder thermische Anbindung eines Drosselkörpers 31 an das Gehäuse 2 und/oder das Lagerschild 7 an dieser Schnittstelle erfolgen. Dabei wird das Lagerschild 7 an das Gehäuse 2 geschraubt, wobei sich zumindest abschnittsweise die radial äußeren Bereiche des Drosselkörpers 31 jeweils an oder zwischen Lagerschild 7 und Gehäuse 2 befinden.

Ein der die dynamoelektrische rotatorische Maschine 1 speisender Umrichter 16, mit folgenden Bauelemente, wie Leistungshalbleiter, Kondensatoren, Steuer- und Regeleinheiten und Kommunikationseinheiten ist in dem Umrichterbauraum 13 untergebracht. Der Drosselkörper 31 ist zwischen Umrichterbauraum 13 und Motorinnenraum 18 angeordnet. Eine Kontaktierung 14, 15 der jeweils relevanten Bauelemente des Umrichters zu einem Klemmenkasten 3 und/oder zu dem Wicklungssystem 5 und/oder zu Drosseln 33, 32 des Drosselkörpers 31 erfolgt vorzugsweise über Steckkontakte.

Der Umrichter 16 ist ortsfest und der Umrichterbauraum 13 und der Drosselkörper 31 weist einen Wellendurchgang 9 auf, der je nach Höhe der sättigungsbedingten Drosselstreufelder zwischen 1mm und 10 mm Abstand seiner radial innenliegenden Bauelementen zur Welle 8 aufweist. Das BS-Lager 10 ist am Topfboden 22 des Lagerschildes 7 angeordnet. Ein Lagerwechsel ist somit einfacher möglich, bei gleichzeitiger Maximierung des Umrichterbauraums 13.

Innerhalb des Umrichterbauraum 13 sind vor allem die Bauelemente des Umrichters, die einer intensiveren Kühlung bedürfen, wie z.B. die Leistungselektronik an den inneren Seitenwänden des Lagerschildes 7, und/oder auch an den axial benachbarten Gehäuseabschnitt thermisch gekoppelt.

Die Lageraufnahme 24 des Lagers 10 ist in dieser Ausführung tubusförmig gestaltet, was eine Demontage des Lagers 10 erleichtert.

Der Umrichterbauraum 13 ist auf das Innere des Lagerschildes 7 beschränkt und/oder ragt axial zumindest abschnittsweise über die Seitenwände 19. Der den Umrichterbauraum 13 einnehmende Umrichter 16 bildet somit eine vorab montierbare Baueinheit, die lediglich noch mit dem Wicklungssystem 5 und/oder den Drosseln des Drosselkörpers 31 und/oder mit dem Klemmenkasten 3 elektrisch kontaktiert werden muss.

Der Topfboden 22 des B-seitigen Lagerschildes 7 weist gemäß FIG1 eine tubusförmige Lageraufnahme 24 des Lagers 10 auf. Der Topfboden 22 des B-seitigen Lagerschildes 7 kann auch komplett glatt, also in einer Ebene senkrecht zur Achse 12 ausgeführt sein.

Sowohl auf der A-Seite als auch auf der B-Seite ragt die Welle 8 aus dem Antrieb 30. Auf der A-Seite wird eine Arbeitsmaschine, wie z.B. ein Kompressor oder eine Pumpe angeschlossen. Auf der B-Seite sind ein Lüfter und/oder modulartige Anbauten wie eine Bremseinheit, ein Fremdlüftermodul, oder ein Geber, insbesondere Drehimpulsgeber anbringbar.

Die tubusförmige Lageraufnahme und das Lagerschild 7 sind vorteilhafterweise einstückig ausgebildet sind. Die Kühlrippen an der äußeren Seitenwand des Lagerschildes 7 sind abschnittsweise parallel angeordnet.

Der Umrichterbauraum 13 ragt in diesen Ausführungen axial über das Lagerschild 7, wobei sich dann dieser, axial über die Seitenwände 19 ragende Abschnitt des Umrichters im zusammengebauten Zustand im Gehäuse 2 der Maschine 1 befindet. Der Drosselkörper 31 ist dann dort beispielsweise in einer inneren umfänglich verlaufenden Ausnehmung des Gehäuses 2 anzubringen.

Über Befestigungselemente lässt sich das Lagerschild 7 ggf. zusammen mit dem Drosselkörper 31 am Gehäuse 2 befestigen.

Der Umrichterbauraum 13 weist, ebenso wie der Drosselkörper 31 einen möglichst geringen Wellendurchgang 9 auf.

In den inneren Seitenwänden des Lagerschildes 7 sind axial verlaufende tangential ausgerichtete Taschen vorgesehen, in die besonders die Leistungshalbleiter des Umrichters angeordnet werden, und die dort thermisch an die Seitenwände 19 des Lagerschildes 7 gekoppelt sind.

Plane Flächen sind umfänglich an der inneren Seitenwand 20 des Lagerschildes 7 zur Positionierung der Leistungshalbleiter vorgesehen. Die Anzahl dieser planen Flächen richtet sich nach der Anzahl der wärmeintensiven Wärmequellen.

Axial an der B-Seite kann ein Eigen- oder Fremdlüfter Lüfter vorgesehen werden, der einen Kühlluftstrom generiert, der durch eine optionale Lüfterhaube geführt wird. Der Luftstrom wird über eine Ansaugöffnung in der Haube dem Lüfter zugeführt.

Die abzuführende Wärme aus der Maschine 1 setzt sich u.a. aus der Verlustwärme von Stator 4 und Rotor 6 zusammen.

Das Lagerschild 7 ist aus thermisch gut leitfähigem Material, so dass die Verlustwärme der Bauelemente des Umrichters 16, insbesondere der Leistungshalbleiter an den planen Flächen aus dem Umrichterbauraum 13 an die äußere Seitenwand des Lagerschildes 7 und/oder einen Kühlluftstrom abgebbar ist. Zusätzliche Kühlrippen 11 am Gehäuse 2 und/oder an der äußeren Seitenwand des Lagerschildes 7, erhöhen den Wärmeabgabeeffekt, insbesondere wenn, eine Lüfterhaube den Kühlluftstrom leitet.

Um die Oberfläche des Lagerschildes 7 zu vergrößern, weist der Topfboden an seiner Außenseite zusätzlich sich radial erstreckende oder parallel angeordnete Rippen auf. Vorteilhafterweise sind die Rippen 11 des Lagerschildes 7 und die Rippen des Gehäuses 2 der dynamoelektrischen rotatorischen Maschine 1 in axialer Flucht, um somit dem Kühlluftstrom möglichst wenig Strömungswiderstand entgegenzusetzen.

Eine Kühlung des Antriebs 30 und seiner jeweiligen Abschnitte/Teile/Komponenten erfolgt durch eine oder mehrere Kühleinheiten, die auch als Flüssigkeitskühlung (Kühlmantel am Gehäuse 2 der dynamoelektrischen rotatorischen Maschine 1 und/oder am Lagerschild 7) realisiert werden kann.

Ebenso ist es möglich im Umrichterbauraum 13 und/oder Motorinnenraum 18 einen oder mehrere Innenlüfter vorzusehen, die innerhalb des Umrichterbauraum 13 und/oder Motorinnenraum 18 rotieren und zu einer Luftverwirbelung führen, was die Bauelemente des Umrichters und/oder Stator 4 und Rotor 6 zusätzlich kühlt. Die Innenlüfter können dabei entweder separat als Fremdlüfter temperaturabhängig ansteuerbar sein. Die Innenlüfter können ebenso mechanisch oder magnetisch mit der Welle 8 gekoppelt sein, so dass sich eine Art Eigenbelüftung des Umrichterbauraum 13 und/oder Motorinnenraum 18 einstellt, sobald sich die Welle 8 dreht.

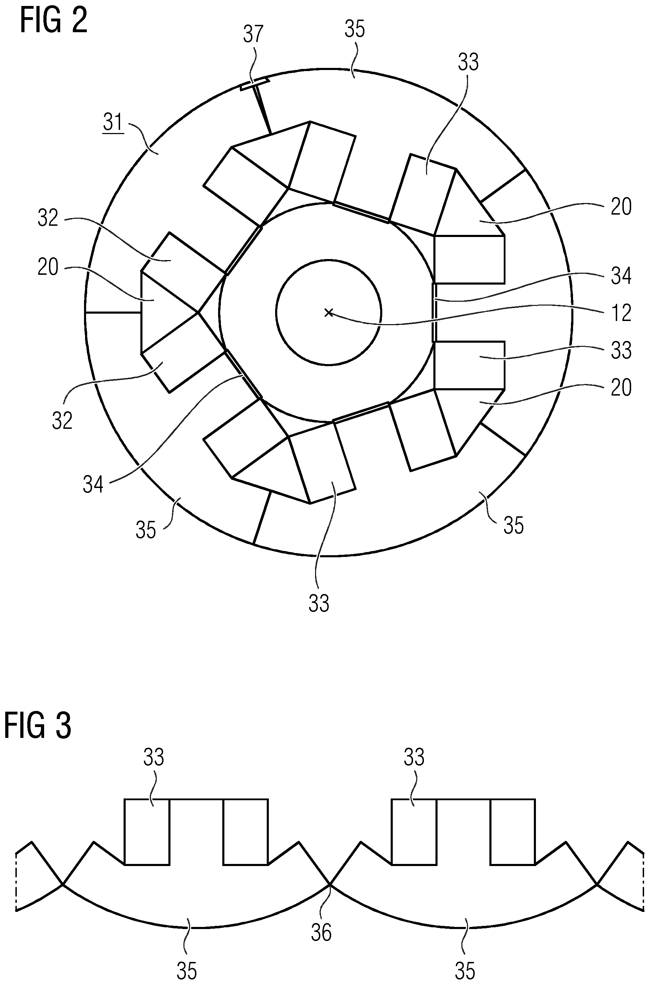

FIG 2 zeigt einen bereits umfänglich zusammengesetzten Drosselkörper 31, der aus Drosselkörperelementen 35 aufgebaut ist. Er besteht aus einem äußeren Teil mit Zähnen und einem getrennten inneren Teil mit Wellendurchgang 9. Zwischen beiden Teilen wird über Distanzelemente 34 oder ein zusammenhängendes Distanzrohr der erforderliche Luftspalt hergestellt. Das Blechpaket des Drosselkörpers 31 wird mit Einzelblechen aufgeschichtet und per Klammerung oder per Backlack oder per Stanzpaketierung zusammengehalten. Der Drosselkörper 31 trägt sowohl die beiden Zwischenkreisdrosseln 32 als auch die drei Netzdrosseln 33.

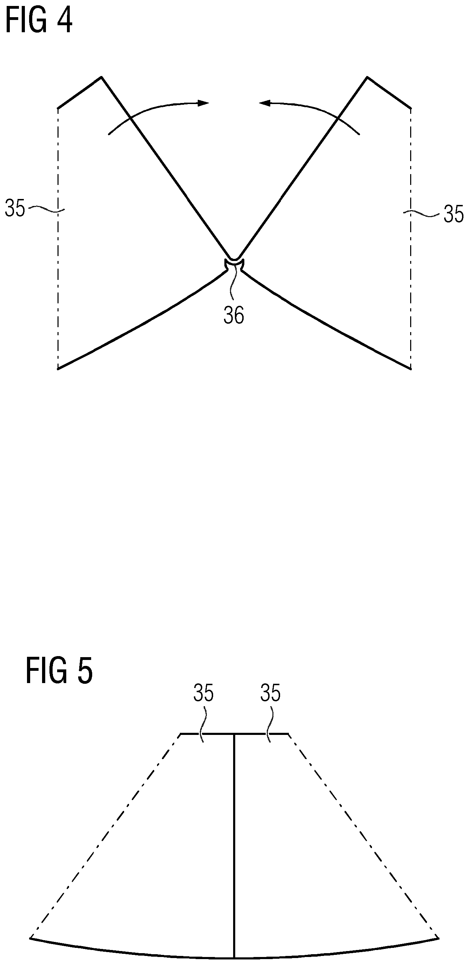

Die einzelnen Spulen der Drosseln 32, 33 werden entweder maschinell auf einem Wickelkörper hergestellt und dann auf die Zähne der Drosselkörperelementen 35 gesteckt oder direkt auf die vorher isolierten Drosselkörperelemente 35 gewickelt. Zu diesem Zweck ist der Drosselkörper 31 wie FIG 3 zeigt geteilt ausgeführt. Durch einen speziell ausgeformten Blechsteg 36 als radial äußere Verbindung der einzlenen Drosselkörperelemente 35, insbesondere der jeweiligen Bleche können die Spulen dann nahezu spaltfrei gemäß FIG 4,5 zusammengeklappt werden.

Falls erforderlich, kann so auch der dreieckige Bereich 20 zwischen zwei benachbarten Spulen bewickelt werden. Hierbei ist vor allem die axiale Ausdehnung der Spule zu beachten um die Kompaktheit des Antriebs 30 nicht zu gefährden.

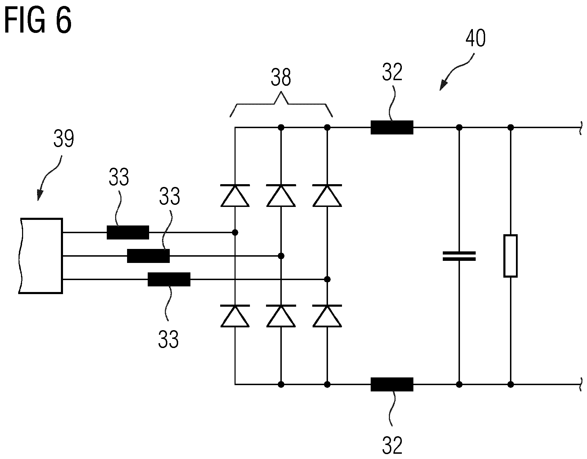

Wie sich anhand von Berechnungen für einen Spannungszwischenkreisumrichter mit Diodeneinspeisung zeigen lässt, ergibt sich die größte Reduktion netzseitiger Oberschwingungen durch eine Kombination von Zwischenkreisdrosseln 32 mit netzseitigen Drosseln 33 gemäß FIG 6.

Der zusammengeklappte Drosselkörper 31 wird in das Gehäuse 2 axial eingeschoben und dort fixiert. Dazu werden gemäß FIG 2 Spreizkeile 37 ein- oder beidseitig eingebracht.

Die Kontaktierung der einzelnen Drosseln (zu Klemmenkasten 14, Wicklungssystem 15, Umrichterelementen 15 und/oder ev. Reihenschaltungen von einzelenen Spulen etc) im Montageablauf richtet sich nach dem Kontaktierungskonzept des Antriebs 30.

Der Drosselkörper 31 kann dabei unterschiedliche Abmessungen von Zwischenkreis- und Netzdrosseln 32, 33 also eine unsymmetrische Geometrie, sowie die Aufteilung der jeweiligen Spulen in mehrere Einzelspulen in Reihenschaltung aufweisen. Dies kann thermisch vorteilhaft sein oder auch geometrisch (Annäherung des Spulenquerschnitts an ein Rechteck).

Die Geometrie und die Anordnung des Drosselkörpers 31 ist an das Motorgehäuse 2 angepasst. Das führt zu einer optimalen Raumausnutzung und es kann somit die größtmögliche Drosselinduktivität und damit auch der größtmögliche Effekt in Bezug auf die Minimierung der Netzrückwirkungen erzielt werden.

Derartige kompakte Antriebe 30 werden bei Kompressoren, Lüftern, Verdichtern, und Pumpen im industriellen Umfeld aber auch bei Mobilitätsanwendungen, wie Zügen oder E-trucks eingesetzt, wo es insbesondere auf eine vergleichsweise hohe Kompaktheit leistungsfähiger Antriebe 30 ankommt. Aufgrund des kompakten Antriebs 30, wird u.a. auch ein vorgegebenes Lichtraumprofil eingehalten, was Vorteile beim Retrofit bietet.

### Bezugszeichenliste

- 1: dynamische elektrische Maschine
- 2: Gehäuse
- 3: Klemmkasten
- 4: Stator
- 5: Wicklungssystem
- 6: Rotor
- 7: B-seitiges Lagerschild
- 8: Welle
- 9: Wellendurchgang
- 10: Lager
- 11: Rippen
- 12: Achse
- 13: Umrichterbauraum
- 14: Kontaktierung, Klemmenkasten
- 15: Kontaktierung, Leistungselektronik zum Wicklungssystem
- 16: Umrichter
- 17: Verguss
- 18: Motorinnenraum
- 19: Seitenwand, Lagerschild
- 20: dreieckiger Bereich
- 22: Topfboden Lagerschild
- 23: Luftspalt
- 24: Lageraufnahme
- 25: Kontaktierung des Wicklungssystems
- 30: Antrieb
- 31: Drosselkörper
- 32: Zwischenkreisdrosseln
- 33: Netzdrosseln
- 34: Distanzelement
- 35: Drosselkörperelement
- 36: Blechsteg
- 37: Spreizdübel
- 38: ungesteuerter Gleichrichter
- 39: Netz
- 40: Zwischenkreis

## Patentansprüche

1. Antrieb (30) mit
- zumindest einer dynamoelektrischen rotatorischen Maschine (1), die in einem Gehäuse (2) angeordnet ist, mit einem in einem Stator (4) angeordneten Wicklungssystem (5) und einem durch eine Luftspalt (23) davon getrennten Rotor (6), der über zumindest ein Lager (10) eines B-seitigen topfähnlichen Lagerschilds (7), um eine Achse (12) drehbar gelagert ist,
wobei sich Stator (4) und Rotor (6) in einem Motorinnenraum (18) befinden
- zumindest einem Umrichter, wobei der Umrichter (16) zumindest einige der folgenden Bauelemente, wie Leistungshalbleiter, Kondensatoren, Steuer- und Regeleinheiten und Kommunikationseinheiten aufweist und sich in einem Umrichterbauraum (13) befindet, der zumindest abschnittsweise von dem B-seitigen Lagerschild (7) radial umgeben ist, wobei zumindest einige Bauelemente des Umrichters (16) mit dem Lagerschild (7) thermisch leitend verbunden sind, indem insbesondere wärmeintensive Bauelemente des Umrichters (16), an einer inneren Seitenwand (20) des topfähnlichen Lagerschilds (7) angeordnet sind,
- wobei der Umrichter (16) axial betrachtet zwischen der dynamoelektrischen rotatorischen Maschine (1) und dem Lager des B-seitigen topfähnlichen Lagerschilds (7) angeordnet ist,
- wobei Motorinnenraum (18) und Umrichterbauraum (13) durch einen Drosseln (32,33) aufweisenden Drosselkörper (31) getrennt sind.

2. Antrieb (30) nach Anspruch 1, **dadurch gekennzeichnet, dass** der Drosselkörper (31) am Außenumfang komplementär zum Innenumfang des Gehäuses (2) an diesem Abschnitt, insbesondere ringförmig, mit einem im Wesentlichen mittig ausgeführten Wellendurchgang (9) ausgestaltet ist.

3. Antrieb (30) nach Anspruch 2, **dadurch gekennzeichnet, dass** der Drosselkörper (31) aus umfänglich angeordneten Drosselkörperelementen (35) aufgebaut ist.

4. Antrieb (30) nach Anspruch 3, **dadurch gekennzeichnet, dass** die Drosselkörperelemente (35) am äußeren Umfang mittels speziell geformter Blechstege (36) zusammenhängen.

5. Antrieb (30) nach einem der vorhergehenden Ansprüche, **dadurch gekennzeichnet, dass** der Drosselkörper (31) Drosseln/Spulen aufweist, insbesondere mit radial ausgerichteter Spulenachse.

6. Antrieb (30) nach einem der vorhergehenden Ansprüche, **dadurch gekennzeichnet, dass** die Drosseln als Netzdrossel (33) oder Zwischenkreisdrossel (32) ausgebildet sind.

7. Antrieb (30) nach einem der vorhergehenden Ansprüche, **dadurch gekennzeichnet, dass** das Drosselkörper (31) zumindest abschnittsweise mit dem Gehäuse (2) und/oder Lagerschild (7) elektrisch und/oder thermisch leitend verbunden ist.

8. Antrieb (30) nach Anspruch 7, **dadurch gekennzeichnet, dass** die Fixierung des Drosselkörpers (31) im Gehäuse (2) mittels Spreizdübel (37) erfolgt.

9. Antrieb (30) nach einem der vorhergehenden Ansprüche, **dadurch gekennzeichnet, dass** das Lagerschild (7) zumindest an seinen äußeren Seitenwänden (21) abschnittsweise Kühlrippen (11) aufweist.

10. Antrieb (30) nach einem der vorhergehenden Ansprüche, **dadurch gekenn-zeichnet**, dass die dynamoelektrische rotatorische Maschine (1) in einem Gehäuse (2) eingeschlossen ist, das zumindest abschnittsweise axial verlaufende Kühlrippen aufweist.

11. Antrieb (30) nach den vorhergehenden Ansprüche 9 und 10, **dadurch gekenn-zeichnet**, dass die Kühlrippen (11) der Lagerschildes (7) und die Kühlrippen des Gehäuses (2) axial fluchten.

12. Antrieb (30) nach einem der vorhergehenden Ansprüche, **dadurch gekennzeichnet, dass** axial außerhalb des Lagerschildes (7) eine Kühleinheit als Lüftereinheit anbringbar ist, die als Eigenlüfter und/oder Fremdlüfter ausgebildet ist und zumindest abschnittsweise über das Lagerschild (7) und die dynamoelektrische rotatorische Maschine (1) einen Kühlluftstrom generiert.

13. Antrieb (30) nach einem der vorhergehenden Ansprüche, der u.a. bei Kompressoren, Lüftern, Verdichtern, Pumpen im industriellen Umfeld und bei Mobilitätsanwendungen eingesetzt wird.
